# DEMANDE DE BREVET EUROPEEN

(11) **EP 4 116 159 A1**
(43) Date de publication de la demande: **11.01.2023**
(21) Numéro de dépôt: 22157677.0
(22) Date de dépôt: 21.02.2022
(51) Int. Cl.: B60T 7/06, G05G 1/36

(54) **PÉDALIER POUR COMMANDE DE FREINAGE À PÉDALE D'UN VÉHICULE AUTOMOBILE**

(30) Priorité: 24.02.2021 FR 2101775
(71) Demandeur: AKWEL, 01410 Champfromier (FR)
(72) Inventeur: CARCELEN, Juan, 27910 Perriers-sur-Andelles (FR); GREGOIRE, Christophe, 76680 Bosc-Berenger (FR); DEVARENNE, Christophe, 60210 Hautbos (FR); VAZQUEZ CARBALLO, José Oscar, 36201 VIGO (ES)
(74) Mandataire: Martin, Marie-Aude

(57) **Abrégé**

Le pédalier (30) comprend un support (32), une pédale (34) montée pivotante autour d'un axe de pivot (33) du support (32) et une liaison articulée (40), ladite liaison (40) étant configurée pour relier la pédale (34) à une barre (20) de renvoi transversale reliée à un dispositif de commande, prévu pour être monté de l'autre côté (14) du véhicule, de telle sorte que l'application d'un couple fonctionnel d'entraînement de ladite pédale (34) autour dudit axe (33) depuis une configuration relevée vers une configuration enfoncée entraîne la rotation de la barre (20). Le pédalier (30) comprend un organe (70) de rattrapage d'un jeu fonctionnel de la pédale (34), ledit organe (50) étant configuré pour exercer un couple résistant sur ledit axe de pivot (33) de la pédale (34) dans un sens opposé au sens dudit couple fonctionnel, qui tend à s'effacer lors de l'enfoncement de la pédale (34).

## Description

La présente invention concerne un pédalier pour commande à pédale d'une fonction de pilotage d'un véhicule automobile, en particulier une fonction de freinage, ainsi qu'une commande à pédale comprenant un tel pédalier.

Une commande de freinage d'un véhicule automobile comporte généralement une pédale de frein agissant sur un maître-cylindre, pour transmettre une pression hydraulique à des freins de roues. La pédale de frein est généralement fixée dans l'habitacle du véhicule sur une tôle appelée tablier, séparant l'habitacle du compartiment situé à l'avant du véhicule qui reçoit le groupe motopropulseur.

Généralement, dans le compartiment avant, on trouve successivement un amplificateur de freinage à dépression fixé sur ce tablier, qui génère un effort complémentaire d'assistance, et le maître cylindre positionné dans l'axe de l'amplificateur de freinage, et fixé sur cet amplificateur.

La majorité des véhicules comporte un poste de conduite situé du côté gauche de l'habitacle, pour une conduite à droite de la route. La pédale de frein de ce poste de conduite agit directement par une tige de commande, sur le maître-cylindre disposé devant cette pédale.

Toutefois, dans certains pays comme le Royaume-Uni, le Japon ou encore l'Australie, on roule à gauche de la route, et le poste de conduite du véhicule se situe sur le côté droit de l'habitacle.

Les constructeurs automobiles conçoivent généralement à l'origine leurs véhicules pour une conduite à gauche, et prévoient une adaptation pour disposer le poste de conduite à droite tout en gardant l'amplificateur de freinage et le maître-cylindre du côté gauche. Cette conception universelle permet de produire des véhicules suivant les deux dispositions, sans déplacer les composants du freinage se trouvant dans le compartiment avant.

Une telle adaptation est connue, notamment du document FR-A1-2790116 qui prévoit une barre de renvoi transversale fixée au tablier et guidée en rotation suivant son axe, qui est commandée par la pédale de frein située du côté droit de l'habitacle, pour entraîner du côté gauche un levier de commande du système de freinage.

Sous l'effet de la rotation de la barre de renvoi, le levier de commande se trouvant en face du maître-cylindre, agit alors directement sur ce maître-cylindre par l'intermédiaire d'un levier de commande.

Un tel agencement permet de simplifier l'adaptation du véhicule automobile à une conduite à gauche de la route lorsque le véhicule a été initialement prévu pour une conduite à droite de la route.

Toutefois, la déportation du pédalier par rapport au dispositif de commande de freinage par l'intermédiaire d'une barre transversale de renvoi est à l'origine de vibrations indésirables au niveau de la pédale notamment lors d'une phase de roulage du véhicule sur un sol irrégulier, par exemple un sol pavé. De telles vibrations nuisent à la perception globale de la qualité perçue du véhicule automobile par l'usager.

Un but de la présente invention est de remédier à cet inconvénient.

A cet effet, l'invention a notamment pour objet un pédalier pour commande à pédale d'une fonction de pilotage d'un véhicule automobile, en particulier une fonction de freinage, comprenant un support prévu pour être monté latéralement d'un côté du véhicule automobile, une pédale montée pivotante autour d'un axe de pivot du support et une liaison articulée, ladite liaison étant configurée pour relier la pédale à une barre de renvoi transversale de ladite commande reliée à un dispositif de commande de la fonction de pilotage, prévu pour être monté de l'autre côté du véhicule, de telle sorte que l'application d'un couple fonctionnel d'entraînement de ladite pédale autour dudit axe depuis une configuration inactive relevée vers une configuration active enfoncée entraîne la rotation de la barre par l'intermédiaire de la liaison articulée provoquant l'actionnement dudit dispositif, caractérisé en ce que le pédalier comprend un organe de rattrapage d'un jeu fonctionnel de la pédale, ledit organe étant configuré pour exercer un couple résistant sur ledit axe de pivot de la pédale dans un sens opposé au sens dudit couple fonctionnel, qui tend à s'effacer lors de l'enfoncement de la pédale.

Grâce à l'organe de rattrapage, le pédalier permet d'éviter des vibrations au niveau de l'axe de pivot de la pédale lors des phases de roulage, notamment sur un sol irrégulier. Par ailleurs, dans le cas d'une commande de freinage, comme le couple résistant tend à s'effacer pendant la phase de freinage au profit du couple fonctionnel assurant la fonction de freinage, il ne perturbe aucunement le fonctionnement optimal de cette commande de pilotage.

Au sens de la présente invention, on entendra par l'expression « effacement du couple résistant », que l'intensité du couple résistant devient minoritaire voire résiduelle, par rapport à l'intensité du couple fonctionnel opposé permettant de réaliser la fonction de pilotage, par exemple en diminuant progressivement ou en s'atténuant, voire même en s'annulant lors de l'enfoncement de la pédale.

Dans un autre mode de réalisation préféré de l'invention, l'organe de rattrapage comprend un ressort configuré pour adopter dans la configuration relevée de la pédale, un état de travail dans lequel le ressort exerce un effort sur la pédale en la sollicitant en pivotement autour de son axe dans un sens opposé à son sens d'enfoncement et pour adopter lors de l'enfoncement de la pédale, un état de détente dans lequel le ressort tend à libérer la pédale de l'exercice de son effort.

Dans un autre mode de réalisation préféré de l'invention, l'organe comprend un ressort fonctionnant en compression, monté solidaire de ladite liaison articulée, et configuré pour exercer un effort de compression contre la pédale dans son état de travail.

Dans un autre mode de réalisation préféré de l'invention, la liaison articulée supporte le ressort de façon à positionner au moins une surface de compression supérieure du ressort sensiblement à l'aplomb et en contact avec un bord inférieur de la pédale dans la configuration relevée de la pédale et à l'écarter, par exemple angulairement, dudit bord inférieur lors de l'enfoncement de la pédale.

Dans un autre mode de réalisation préféré de l'invention, la liaison articulée comprend une biellette reliée à une partie sensiblement médiane de la pédale en une première articulation de rotation et un levier menant configuré pour être monté solidairement en rotation à la barre de renvoi et relié à la biellette en une deuxième articulation de rotation, ledit ressort de compression étant porté par la biellette.

Dans un autre mode de réalisation préféré de l'invention, dans lequel la biellette support le ressort de façon à positionner, dans la configuration relevée, une surface de compression inférieure du ressort sensiblement à l'aplomb et en contact avec une surface d'une partie sommitale du levier menant, adjacente à la deuxième articulation.

Dans un autre mode de réalisation préféré de l'invention, le bord inférieur de la pédale comprend un profil délimitant un creux dans la partie médiane de la pédale, adjacent à la première articulation, la biellette supporte le ressort de compression de façon à positionner une surface de compression du ressort en vis-à-vis d'une surface dudit creux, dans la configuration relevée.

Dans un autre mode de réalisation préféré de l'invention, la biellette comprend un corps définissant une partie centrale et deux parties d'extrémités d'articulation, ladite partie centrale étant pourvue d'une projection dorsale ou frontale délimitant un logement de réception du ressort de compression configuré pour positionner une surface de compression du ressort contre un bord inférieur de la pédale, dans la configuration relevée de la pédale.

Dans un autre mode de réalisation préféré de l'invention, le corps de la biellette comprend deux languettes s'étendant selon le sens de leur longueur selon une direction longitudinale de la biellette en vis-à-vis l'une de l'autre et étant reliées dans la partie centrale de la biellette par la projection dorsale ou frontale.

Dans un autre mode de réalisation préféré de l'invention, les languettes de la biellette convergent localement l'une vers l'autre pour définir une zone de resserrement conformée pour enserrer et retenir un ergot de maintien formé dans le ressort.

Dans un autre mode de réalisation préféré de l'invention, la biellette est obtenue par pliage en deux d'une unique pièce métallique, ladite pièce comprenant deux partie latérales oblongues configurées pour former les languettes et une partie intermédiaire de liaison transversale des deux parties oblongues entre elles configurée pour former la projection délimitant le logement du ressort, la pièce étant pliée de façon à amener les parties oblongues en vis-à-vis l'une de l'autre en courbant la partie intermédiaire sur elle-même pour délimiter une paroi du logement.

Dans un autre mode de réalisation préféré de l'invention, la biellette et le ressort de compression sont formés d'une seule pièce obtenue par moulage par injection bi-matière d'une première matière plastique par remplissage d'une cavité libre d'un moule délimitant le corps de la biellette pourvu d'un alésage creux et par moulage par injection d'une deuxième matière plastique par remplissage d'au moins l'alésage creux de la biellette pour former le ressort de compression.

Dans un autre mode de réalisation préféré de l'invention, l'alésage forme un canal traversant la projection selon une direction longitudinale de la biellette, ledit canal débouchant du côté de la première articulation de la biellette et du côté de la deuxième articulation de la biellette.

Dans un autre mode de réalisation préféré de l'invention, le ressort de compression est formé par un plot en matériau élastomère déformable, tel que du polyuréthane.

Dans un autre mode de réalisation préféré de l'invention, l'organe comprend un ressort de torsion de type à enroulement monté autour de l'axe de pivot, sollicitant la pédale en pivotement autour de son axe dans un sens opposé à un sens fonctionnel d'enfoncement de la dite pédale.

Dans un autre mode de réalisation préféré de l'invention, la pédale comprend un relief configuré pour amener le ressort dans un état précontraint de travail, dans la configuration relevée de la pédale, et pour libérer le ressort de cet état précontraint au début d'une course d'enfoncement de la pédale.

Dans un autre mode de réalisation préféré de l'invention, le relief est formé par un décrochement formé dans un bord supérieur de la pédale qui définit un siège d'appui contre lequel vient s'appliquer une portion d'extrémité du ressort.

D'autres caractéristiques et avantages de l'invention apparaîtront à la lumière de la description qui suit, faite en référence aux dessins annexés dans lesquels :
[fig.1] : la [fig.1] représente une vue de face et en perspective d'une commande à pédale avec un côté droit, au niveau des pieds du conducteur et un côté gauche, au niveau des pieds du passager, comprenant un pédalier selon un premier mode de réalisation de l'invention monté du côté droit de la commande;
[fig.2] : la [fig.2] est une vue de trois-quarts avant en perspective du côté droit ddu pédalier de la [fig.1] ;
[fig.3] : la [fig.3] est vue en perspective éclatée du pédalier de la [fig.2] ;
[fig.4] : la [fig.4] est vue en perspective d'un organe de rattrape d'un jeu fonctionnel du pédalier de la [fig.1] dans un état démonté ;
[fig.5] : la [fig.5] illustre trois étapes de fonctionnement 5A, 5B et 5C de l'organe de la [fig.4] ;
[fig.6] : la [fig.6] illustre de façon schématique un jeu fonctionnel de la pédale au niveau des ses trois articulations ;
[fig.7] : la [fig.7] représente une vue en perspective de côté d'une commande à pédale comprenant un pédalier selon un deuxième mode de réalisation de l'invention ;
[fig.8] : la [fig.8] représente une vue en perspective éclatée du pédalier représenté sur la [fig.7] ;
[fig.9] : la [fig.9] représente une vue en perspective d'une biellette et d'un organe de rattrapage du pédalier selon le deuxième mode de réalisation de l'invention ;
[fig.10] : la [fig.10] représente une vue en en perspective partielle d'une pédale et d'une liaison articulée du pédalier conformément à un troisième mode de réalisation de l'organe de rattrapage dans une configuration relevée de la pédale ;
[fig.11] : la [fig. 11] représente une vue écorchée et en coupe de la biellette du pédalier de la [fig.10] ;
[fig.12] : la [fig. 12] représente une vue en coupe du pédalier de la [fig.10] représentant en trait continu le pédalier dans sa configuration relevée et en trait discontinu le pédalier dans sa configuration enfoncée ;
[fig.13] : la [fig. 13] représente une vue en coupe du pédalier de la [fig.10] dans la configuration relevée de la pédale ;
[fig.14] : la [fig. 14] représente une vue en coupe du pédalier de la [fig.10] dans une configuration enfoncée de la pédale ;
[fig.15] : la [fig. 15] est une vue en coupe du pédalier de la [fig.10] illustrant de façon schématique le principe de fonctionnement de l'organe de rattrapage de l'invention.

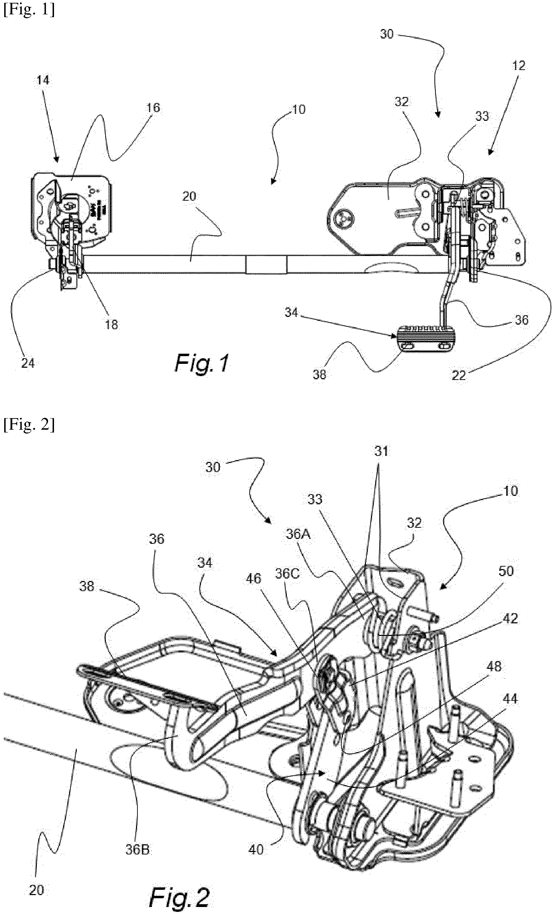

On a représenté de façon schématique sur **les** **figures 1 à 15** une commande à pédale d'un véhicule automobile comprenant un dispositif de commande et un pédalier agissant sur ce dispositif de commande. Dans la suite de la description, cette commande à pédale est désignée par la référence générale 10 et le pédalier porte la référence générale 30.

Au sens de la présente invention, les termes « dorsal », « frontal », « inférieur », « supérieur », « latéral », « droite », « gauche » sont définis en considérant la disposition des éléments telle que représentée sur la [fig.1], c'est-à-dire selon un point de vue d'un usager du véhicule se situant en face de la commande de pilotage 10 dans une position d'utilisation de cette commande 10.

De façon générale, cette commande à pédale 10 permet la commande d'une fonction de pilotage du véhicule automobile. Dans le cas de la présente description, la fonction de pilotage réalisée par la commande à pédale 10 est une fonction de freinage. Dans la suite de la description, on considérera que le dispositif de commande est un dispositif de freinage qui est non représenté sur les figures. Bien entendu, il pourra être également envisagé d'appliquer l'invention à une autre fonction de pilotage du véhicule automobile, telle qu'une fonction d'embrayage.

Généralement, le pédalier 30 est fixé dans l'habitacle du véhicule sur une tôle appelée tablier (non représentée), séparant l'habitacle du compartiment situé à l'avant qui reçoit le groupe motopropulseur.

De façon connue en soi, le dispositif de freinage est par exemple monté dans le compartiment avant du véhicule automobile et est séparé du pédalier 30 par le tablier. Il comprend par exemple un maître-cylindre qui permet de transmettre une pression hydraulique à des freins de roues et un amplificateur de freinage à dépression, qui est prévu pour générer un effort complémentaire d'assistance et sur lequel est généralement fixé le maître-cylindre.

Plus particulièrement, cette commande à pédale 10 est prévue pour s'adapter à une conduite du véhicule à gauche sur la route, avec un poste de conduite à droite comprenant le pédalier 30 tout en conservant un agencement du dispositif de freinage à gauche du véhicule.

Ainsi, le pédalier 30 est déporté d'un côté droit 12 du véhicule au niveau des pieds d'un conducteur alors que le dispositif de freinage est situé d'un côté gauche 14 du véhicule de façon à se trouver en face des pieds du passager. En général, comme cela est illustré sur la [fig.1], du côté gauche 14, la commande 10 comprend un support 16 et un levier 18 agissant sur le dispositif de freinage, comme cela sera détaillé par la suite.

Afin de permettre au pédalier 30 situé du côté droit 12 d'agir sur le dispositif de freinage situé du côté gauche 14 de la commande de freinage 10, la commande 10 comprend encore une barre de renvoi transversale 20 reliée du côté droit au pédalier 30 et du côté gauche 14 au dispositif de freinage.

Cet agencement permet de façon avantageuse d'être adapté aux deux versions (conduite à gauche ou à droite sur la route) sans recourir au déplacement des composants du dispositif de freinage dans le compartiment avant en fonction de la version souhaitée du véhicule automobile.

Le pédalier 30 comprend encore un support 32 prévu pour être monté latéralement d'un côté du véhicule automobile, ici le côté droit 12 de ce véhicule et une pédale 34 montée pivotante autour d'un axe de pivot 33 du support 32.

De préférence, comme cela est visible en particulier sur la [fig.2], la pédale 34 comprend un corps allongé 36 en forme générale de bras comprenant une partie supérieure 36A comprenant une articulation principale 35 autour de l'axe de pivot 33, une partie centrale ou médiane 36C et une partie inférieure 36B formant un patin 38 recevant la pression du pied du conducteur.

Dans cet exemple, l'axe de pivot 33 comprend un arbre de forme générale cylindrique s'étendant entre deux joues latérales 31 du support 32 s'étendant de façon parallèle l'une par rapport à l'autre et traversées chacune par un orifice 28. La pédale 34 comprend dans l'exemple illustré, au niveau de l'articulation principale 35 de sa partie supérieure 36A un palier 26 de guidage en rotation à l'intérieur duquel l'arbre 33 est engagé.

En outre, le pédalier 30 comprend une liaison articulée 40 configurée pour relier la pédale 34 à la barre de renvoi 20 de telle sorte que l'application d'un couple fonctionnel d'entraînement de la pédale 34 autour dudit axe de pivot 33 depuis une configuration relevée inactive vers une configuration enfoncée active entraîne la rotation de la barre 20 et l'actionnement du dispositif de freinage.

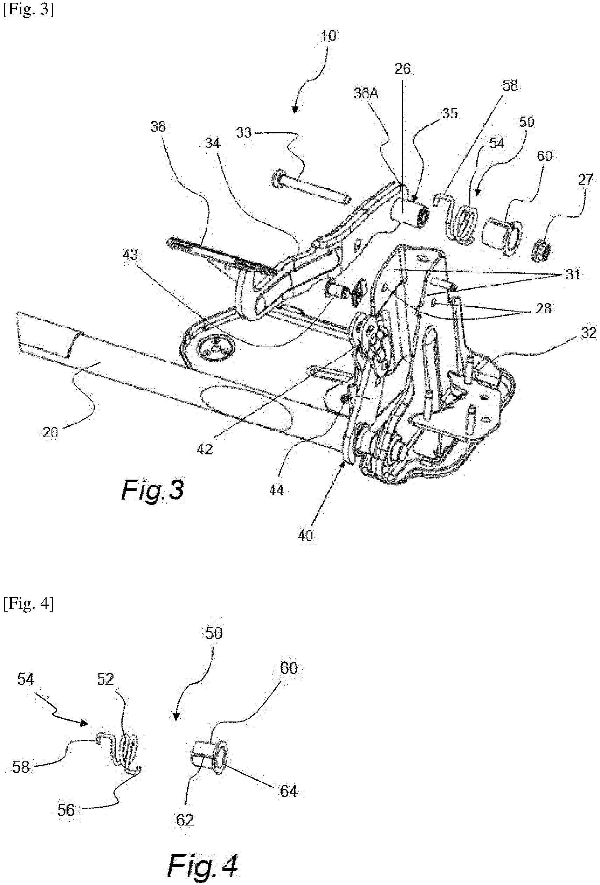

Dans cet exemple, la liaison 40 comprend une biellette 42 reliée à une partie centrale 36C de la pédale 34 en une première articulation de rotation 46 et un levier menant 44 solidaire en rotation de la barre 20 et reliée à la biellette 42 en une deuxième articulation de rotation 48. La biellette 42 est par exemple montée sur la partie centrale ou médiane 36C de la pédale 34, au niveau de sa première articulation 46, par des moyens 43 de fixation démontables (vis, écrous, goupilles, etc.) qui ne seront pas plus détaillés ci-après (représentés sur la [fig.3]).

Le fonctionnement de la liaison articulée 40 est détaillé ci-après. La biellette 42 transmet la pression appliquée sur le patin 38 de la pédale 34, par l'intermédiaire des deux articulations dites « secondaires » 46 et 48 (par opposition à l'articulation dite « principale » 35), au levier menant 44, solidaire en rotation de la barre de renvoi 20. La barre 20 reçoit le couple de la pédale de frein 34 par le levier menant 44 de la liaison articulée du pédalier 30 situé à son extrémité droite 22, pour le transmettre par exemple à un levier mené 18 (représenté sur la [fig.l]) qui se trouve à son extrémité gauche 24.

Le levier mené 18 transmet ainsi le couple reçu de la barre de renvoi 20 au dispositif de freinage, en traversant le support gauche 16 et le tablier séparant l'habitacle du compartiment avant, pour l'appliquer au dispositif de freinage comprenant par exemple le maître-cylindre de frein et qui se trouve du côté du tablier comprenant le compartiment avant du véhicule automobile.

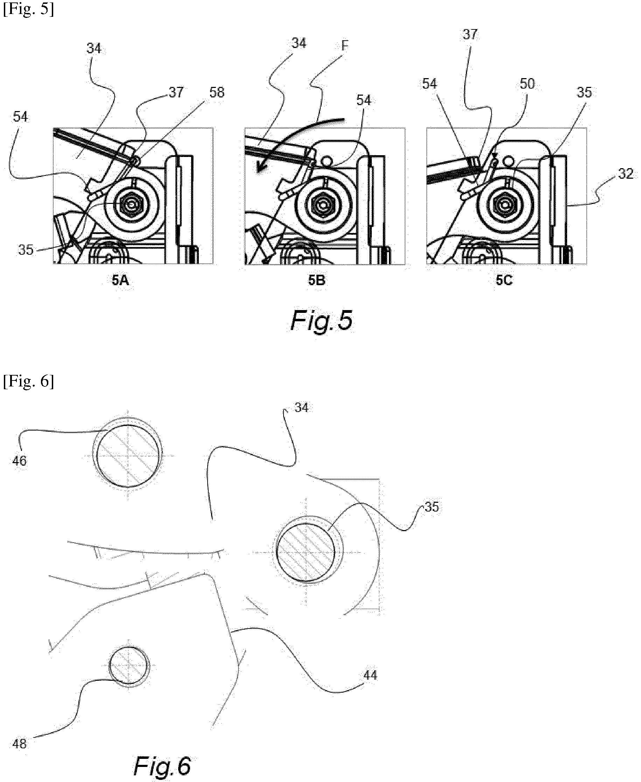

Ces trois articulations en rotation formées par l'articulation principale 35 de la pédale 34 sur le support 32 et les deux articulations secondaires 46 et 48 de la liaison articulée 40 peuvent créer un jeu fonctionnel de la pédale 34 comme cela est illustré schématiquement en [fig.6].

Sur cette [fig.6], on voit notamment que chaque articulation principale 35 ou secondaire 46 ou 48 introduit un jeu fonctionnel dans la chaîne cinématique d'articulation de la pédale 34 du pédalier 30. Ce jeu fonctionnel peut résulter d'un débattement axial ou radial des éléments d'articulation de la pédale 34. Ce jeu fonctionnel est notamment à l'origine de vibrations indésirables lors des phases de roulage du véhicule automobile en particulier sur un sol irrégulier, tel qu'un sol pavé.

Afin de remédier à cet inconvénient, conformément aux premier et deuxième modes de réalisation de l'invention, le pédalier 30 comprend encore un organe 50 de rattrapage du jeu fonctionnel de la pédale 34.

Plus particulièrement, cet organe 50 est configuré pour exercer un couple résistant sur l'axe de pivot 33 de la pédale 34 dans un sens opposé au sens du couple fonctionnel. En particulier, ce couple résistant tend à s'effacer lors de l'enfoncement de la pédale 34. Par l'expression « effacement du couple résistant », on entendra que l'intensité du couple résistant devient minoritaire voire résiduelle, par rapport à l'intensité du couple fonctionnel opposé permettant de réaliser la fonction de freinage, par exemple en diminuant progressivement ou en s'atténuant, voire même en s'annulant lors de l'enfoncement de la pédale 34.

De préférence, l'organe 50 comprend un ressort configuré pour adopter dans la configuration relevée de la pédale 34, un état de travail dans lequel le ressort exerce un effort sur la pédale 34 en la sollicitant en pivotement autour de son axe 33 dans un sens opposé à son sens d'enfoncement et pour adopter lors de l'enfoncement de la pédale 34, un état de libération dans lequel le ressort tend à libérer la pédale 34 de l'exercice de son effort.

Dans le premier mode de réalisation illustré sur **les** **figures 1 à 5****,** l'organe 50 comprend un ressort de torsion 54 monté autour dudit axe de pivot 33 et pourvu de moyens de fixation au support 32 et à la pédale 34 permettant d'exercer un couple résistant de torsion sur la pédale 34. De cette façon, le ressort de torsion 54 sollicite la pédale 34 en pivotement autour de son axe 33 dans un sens opposé à un sens fonctionnel d'enfoncement de la dite pédale 34.

Par exemple, le ressort de torsion hélicoïdal 54 est formé par un fil métallique suivant une forme en enroulement monté autour dudit axe de pivot 33 présentant une première portion d'extrémité 58 agissant sur la pédale 34 et une deuxième portion d'extrémité 56 solidaire du support 32.

En outre, de préférence, la pédale 34 comprend un relief 37 configuré pour positionner le ressort de torsion 54 dans un état précontraint de travail, dans la configuration relevée de la pédale 34, et pour libérer le ressort 54 de cet état précontraint lors de l'enfoncement de la pédale 34.

De préférence, la portion d'extrémité 58 du ressort 54 est pourvue d'une section rectiligne venant exercer un effort de torsion sur la pédale 34 contre le relief 37. De préférence, la pédale 34 présente un bord supérieur 36S comprenant un décrochement formant le relief 37 et délimitant un siège d'appui contre lequel vient s'appliquer la portion d'extrémité 58 du ressort 54. En variante, le relief peut comporter un orifice traversant du corps de la pédale 34 à l'intérieur duquel est prévu d'être inséré une portion d'extrémité 58 du ressort de torsion 54 ou toute autre forme de relief permettant au ressort de torsion 54 d'exercer un effort sur le bras 36 de la pédale 34 pour l'amener à pivoter dans un sens opposé au sens fonctionnel d'enfoncement.

Comme cela est illustré sur **les** **figures 3 et 4****,** dans ce premier mode de réalisation, de préférence, l'organe 50 comprend encore une douille 60, étant prévue pour être montée autour de l'arbre 35 par déformation élastique de la douille 60 et être intercalée entre l'arbre 35 et le ressort 54 monté autour de la douille 60. Cette douille 60 comprend par exemple un corps de forme générale cylindrique présentant une jupe tubulaire 62 surmontée d'une collerette 64 et étant fendue selon sa direction longitudinale. Cette douille 60 a pour fonction de limiter des bruits indésirables générés lors de la déformation du ressort en torsion 54.

On va maintenant décrire les principaux aspects de fonctionnement du pédalier selon ce premier mode de réalisation en référence notamment à la [fig.5].

Initialement, dans l'encadré 5A de la [fig.5], le pédalier 30 est dans une configuration inactive relevée de la pédale 34. Dans cette configuration, la pédale 34 est relevée et le ressort de torsion 54 est maintenu dans un état précontraint de travail contre le relief de décrochement 37 du bord supérieur 36S de la pédale 34. Dans cet état de travail du ressort 54, le ressort de torsion 54 exerce sur l'axe de pivot 33 un couple résistant tendant à s'opposer à des mouvements de vibrations intempestifs de la pédale 34 autour de son axe 33.

Lorsque le conducteur exerce une pression sur le patin 38 de la pédale 34 de freinage dans un sens de pivotement fonctionnel schématisé par la flèche F illustrée dans l'encadré 5B, le relief 37 se déplace avec la pédale 34 en permettant au ressort de torsion 54 de débuter une course de détente à partir de son état initial précontraint (tel qu'illustré en encadré 5A) jusqu'à un état final détendu. Cet état final détendu est atteint de préférence en début de la course d'enfoncement de la pédale 34 afin de ne pas entraver le pivotement de la pédale 34 dans le sens fonctionnel de freinage du véhicule. On pourra considérer que le début de la course d'enfoncement de la pédale 34 correspond par exemple à au plus la première moitié de la course totale de la pédale 34, par exemple moins du premier tiers de la course totale de la pédale 34.

Au cours du pivotement de la pédale 34 dans le sens fonctionnel jusqu'à une configuration active enfoncée, le relief de décrochement 37 s'écarte de l'extrémité 58 dudit ressort 54 de sorte que le ressort de torsion 54 entame sa course de détente libérant la pédale 34 de l'exercice de son effort de torsion. De préférence, afin de limiter l'action du couple résistant au cours de l'enfoncement de la pédale 34, l'état final détendu du ressort 54 est atteint au début de la course d'enfoncement de la pédale 34 comme cela a déjà été décrit ci-dessus.

Dès que l'action de freinage se termine, la pédale 34 revient dans sa configuration relevée en replaçant le ressort 54 dans son état précontraint.

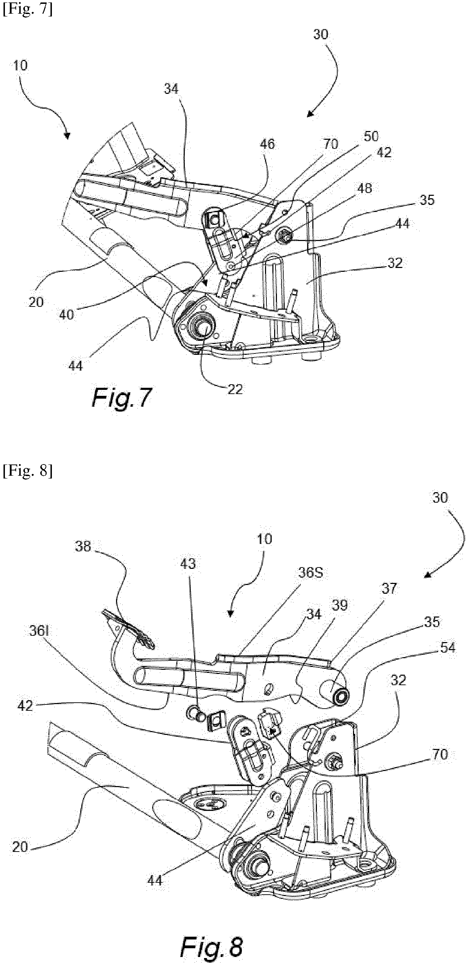

On a représenté sur **les** **figures 7 à 9** un deuxième mode de réalisation d'un pédalier 30 selon l'invention. Dans ce deuxième mode de réalisation, les éléments analogues au premier mode de réalisation portent des références identiques. On notera que sur **les** **figures 7 à 9****,** le ressort de torsion 54 du premier mode de réalisation est représenté mais dans ce deuxième mode de réalisation, ce ressort de torsion 54 est optionnel et peut être supprimé sans nuire au fonctionnement du pédalier 34.

Dans le deuxième mode de réalisation illustré par **les** **figures 7 à 9****,** l'organe 50 comprend un ressort fonctionnant en compression 70, monté solidaire de ladite liaison articulée 40, et configuré pour exercer un effort de poussée contre la pédale 34 dans son état comprimé de travail. On rappelle que même si, **sur les** **figures 7 à 9****,** on voit que l'organe 50 comprend le ressort de torsion 54 et le ressort de compression 70, dans ce deuxième mode de réalisation, le ressort de torsion 54 est optionnel.

De préférence, le ressort de compression 70 est agencé sur la liaison articulée 40 de telle sorte que le ressort 70 présente une surface de compression 72A du ressort 70 sensiblement à l'aplomb et en contact avec un bord inférieur 36I de la pédale 34 dans la configuration relevée de la pédale 34. Par ailleurs, lors de l'enfoncement de la pédale 34, l'agencement du ressort 70 sur la liaison 40 est prévu pour permettre au ressort 70 de s'écarter, par exemple angulairement, dudit bord inférieur 36I lors de l'enfoncement de la pédale 34 afin de libérer la pédale 34 de l'exercice de l'effort du ressort 70.

De préférence, le ressort de compression 70 est porté par la biellette 42. Dans cet exemple, la biellette 42 comprend un corps 80 allongé définissant selon une direction longitudinale de la biellette 42 une partie centrale 82 et deux parties 84 d'extrémités d'articulation.

Dans l'exemple illustré, chacune des parties d'extrémités 84 se présente sous forme d'une fourche définissant deux joues parallèles percées entre lesquelles vient s'intercaler le corps de la pédale 34 ou le levier menant 44 pour former respectivement la première articulation secondaire 46 et la deuxième articulation secondaire 48.

En outre, de préférence, ladite partie centrale 82 est pourvue d'une projection dorsale 86 délimitant un logement 88 de réception du ressort 70. Ce logement 88 est configuré de préférence pour positionner la surface de compression 72A du ressort 70 contre le bord inférieur 36I de la pédale 34, dans la configuration relevée de la pédale 34.

Dans une variante non illustrée de l'invention, la projection 86 peut être disposée frontalement à la biellette 42, une telle configuration nécessitant quelques adaptations pouvant être déduites aisément de la description détaillée de la configuration dorsale de la projection 86 et ne sera donc pas plus détaillée par la suite.

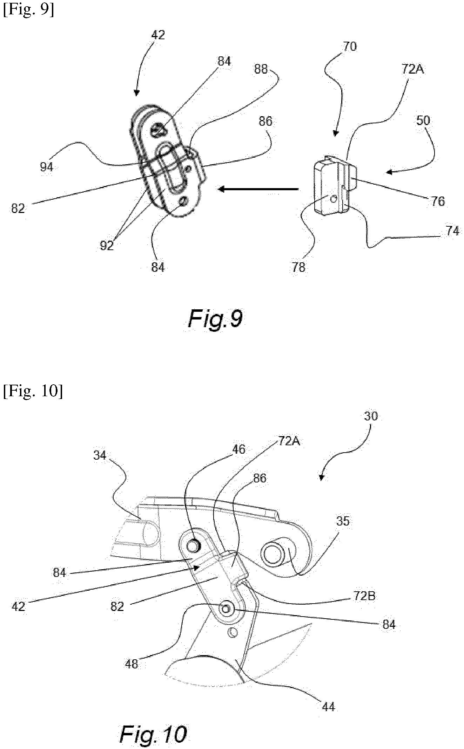

Comme illustré sur la [fig.9], le corps de la biellette 42 comprend deux languettes 92 s'étendant dans le sens de leur longueur selon une direction longitudinale de la biellette 42 en vis-à-vis l'une de l'autre et étant reliées dans la partie centrale 82 de la biellette 42 par la projection dorsale 86.

De préférence, la biellette 42 est réalisée dans un matériau métallique à partir d'une unique pièce métallique, par exemple par pliage de cette pièce métallique. Par exemple, la pièce (non représentée dans son état dépliée) est délimitée par deux parties latérales oblongues configurées pour former les languettes 92 et une partie intermédiaire de liaison transversale des deux parties oblongues entre elles configurée pour former la projection 86 délimitant le logement 88. Pour former la biellette 42, la pièce est alors pliée en deux afin d'amener les parties oblongues en vis-à-vis l'une de l'autre en incurvant la partie intermédiaire de façon à délimiter une paroi périphérique 89 du logement 88.

De préférence, comme cela est illustré sur la [fig.9], le ressort 70 a un corps en forme générale de plot réalisé dans un matériau élastomère déformable. Dans l'exemple, le corps comprend une partie basale 74 conformée pour être engagée à l'intérieur du logement 88 récepteur et une partie sommitale 76, par exemple arrondie, pourvue de la surface de compression 72A et surmontant la partie basale 74 en formant au moins localement une surépaisseur par rapport à la partie basale 74. Dans l'exemple décrit, cette surépaisseur vient prendre appui sur un bord supérieur de la paroi 89 du logement récepteur 88. Comme cela est illustré sur la [fig.9], la partie sommitale 76 du plot forme un épaulement avec la partie basale 74 venant s'appuyer sur le bord supérieur du logement 88.

En outre, de préférence, la biellette 42 issue du pliage en deux de la pièce est déformée de façon à faire converger localement les deux languettes 92 l'une vers l'autre pour définir localement une zone de resserrement 94 conformée pour enserrer et retenir un ergot de maintien 78 ménagé dans le ressort 70.

Par exemple, le corps du ressort 70 comprend une excroissance en saillie 78, ici en forme générale de dent, configurée pour être engagée dans la zone de resserrement 94 des deux languettes 92 et qui forme alors l'ergot de maintien.

Par exemple, le ressort de compression 70 est formé dans un matériau élastomère, par exemple un élastomère de polyuréthane connu sous la dénomination commerciale ELADIP^{®}.

Pour installer le plot 70 à l'intérieur de son logement 86, le plot 70 est basculé par rapport à la biellette 42 de façon à positionner et à engager la partie basale 74 dans le logement 86 puis, le plot 70 est basculé vers l'avant en direction de la biellette 42 de façon à engager l'ergot de maintien 78 entre les deux languettes 92 dans la zone de resserrement 94. Grâce à cet agencement de la zone resserrée 94, la biellette 42 exerce sur le plot 70 une force qui s'oppose à son retrait pour garantir que le plot 70 ne puisse pas, à force de sollicitation, être éjecté hors de son logement 86.

En outre, de préférence, le bord inférieur 36I de la pédale 34 comprend un profil délimitant un creux 39 dans la partie médiane 36C de la pédale 34, adjacent à la première articulation 46. Le ressort de compression 70 est orienté sur la biellette 42 de manière à ce que sa surface de compression 72 s'étende en vis-à-vis d'une surface du creux 39, dans la configuration relevée.

Dans un troisième mode de réalisation illustré sur **les** **figures 10 à 15****,** la biellette 42 et le ressort de compression 70 sont formés d'une seule pièce monobloc en matière synthétique obtenue par moulage par injection dite « bi-matière ». Cette réalisation en matière synthétique est adaptée par exemple pour un pédalier d'embrayage.

Pour la fabrication par moulage d'une telle pièce monobloc, on procède comme suit : on fabrique le corps de la biellette 42 par moulage par injection d'une première matière plastique, par exemple une matière polyamide renforcée en fibres de verre. On prévoit une matrice de moulage comprenant un moule, par exemple en deux parties, et un noyau positionné à l'intérieur du moule afin de délimiter au moins une cavité libre de moulage à l'intérieur de laquelle peut être injectée une matière plastique à l'état fondu. Cette cavité libre de moulage est configurée pour conformer le corps de la biellette 42 comprenant la projection dorsale 86 pourvu d'un alésage creux.

On ferme ensuite le moule et on injecte dans le moule la première matière plastique à l'état fondu. Cette matière plastique remplit la cavité libre du moule. Pendant toute l'étape de fabrication, notamment pendant l'étape d'injection dans le moule de la première matière plastique, le volume intérieur de l'alésage creux est rempli par le noyau. Une fois l'étape d'injection de la première matière terminée, on retire le noyau. On injecte alors une deuxième matière plastique, par exemple une matière élastomère polyuréthane, par remplissage d'au moins l'alésage de la biellette pour former le ressort de compression 70.

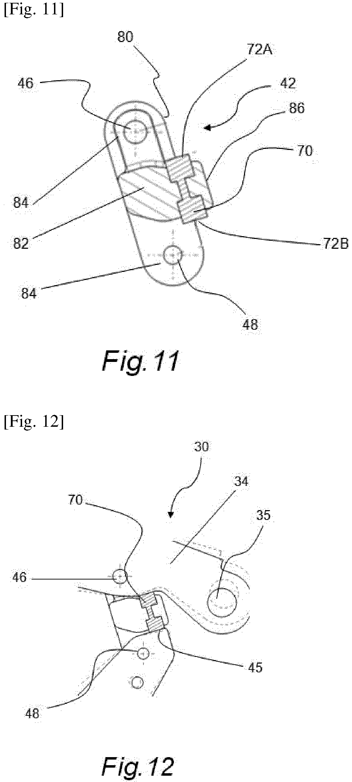

Dans ce troisième mode de réalisation, et comme cela est illustré sur la [fig.11], le ressort de compression 70 présente une surface de compression supérieure 72A et une surface de compression inférieure 72B s'étendant de chaque côté de la biellette 42 selon sa direction longitudinale (ici du côté de la pédale 34 et du côté opposé du levier menant 44). Par exemple, le ressort de compression 70 est agencé sur la biellette 42 de façon à positionner, dans la configuration relevée, la surface de compression inférieure 72B du ressort 70 sensiblement à l'aplomb et en contact avec une surface d'une partie sommitale 45 du levier menant 44, adjacente à la deuxième articulation 48. Le ressort 70 avec ses deux surfaces de compression opposées 72A et 72B, dans son état comprimé, exerce un effort de poussée simultanément sur la pédale 34 et le levier menant 45.

Dans le troisième mode de réalisation illustré sur **les** **figures 10 à 15****,** le ressort 70 se présente sous la forme de deux extrémités en forme de plot reliées entre elles par une tige amincie. Dans ce cas, la fabrication du ressort 70 par moulage par injection ne nécessite qu'un seul point d'injection. Par l'exemple, l'alésage forme un canal qui traverse la projection 86 selon une direction longitudinale de la biellette 42 et qui débouche du côté de la pédale 34 et du côté du levier menant 45.

Eventuellement, dans une première variante non illustrée, l'alésage peut comporter deux canaux borgnes non communiquant débouchant chacun d'un côté de la biellette 42 nécessitant de réaliser le moulage par injection en deux points d'injection pour le remplissage des deux canaux borgnes. Dans une deuxième variante non illustrée, l'alésage peut comprendre un canal borgne débouchant uniquement du côté de la première articulation 46 de la biellette 42 à la pédale 34 pour ne former que le ressort 70 qu'une seule surface de compression supérieure 72A.

Dans une troisième variante non illustrée, la biellette peut être réalisée par moulage par injection d'une matière plastique pour former un corps pourvu d'une projection sur sa partie centrale comme cela a déjà été expliqué ci-dessus, et le ressort de compression 70 peut être rapporté sur la biellette non pas par surmoulage mais par montage en force à l'intérieur dudit alésage.

On va maintenant décrire les principaux aspects de fonctionnement de l'invention selon le troisième mode de réalisation en référence **aux** **figures 10 à 15****.**

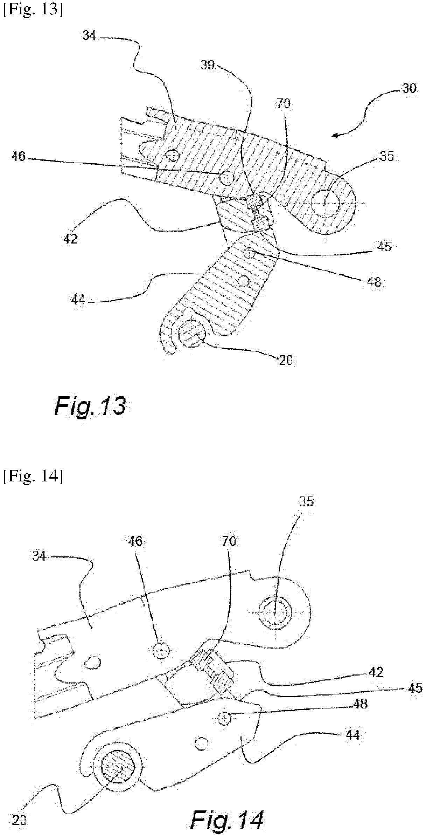

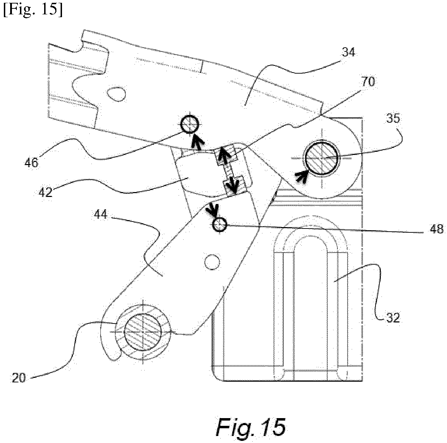

Initialement, le pédalier 30 est dans sa configuration relevée, dans une phase de roulage du véhicule automobile. Le ressort de compression 70 est dans un état précontraint comprimé entre la surface du creux 39 de la pédale 34 et une surface de la partie sommitale 45 du levier menant 44, comme cela est illustré sur la [fig.13]. Dans cette configuration, le ressort comprimé 70 agit en exerçant un effort sur les articulations principale 35 et secondaires 46 et 48 tendant à réduire les jeux fonctionnels de la chaîne cinématique de la pédale 34. Ces efforts sont représentés schématiquement par des flèches sur la [fig.15]. Dans ce cas, les vibrations de la pédale 34 sont limitées à un niveau tel qu'elles ne sont plus perceptibles pour l'usager du véhicule.

Puis, lors d'une action de freinage du véhicule, l'usager applique une pression sur le patin 38 de la pédale de frein pour enfoncer la pédale 34 dans la direction fonctionnelle et ainsi piloter l'actionnement du dispositif de freinage.

La pédale pivote autour de son articulation principale 35 entraînant dans son mouvement également la biellette 42 et le levier menant 44 de la liaison articulée 40 comme cela est visible sur la [fig.12].

Ceci a pour effet d'écarter la surface du creux 39 de la pédale 34 de la surface de compression supérieure 72A du ressort de compression 70 et également la surface de la partie sommitale 45 du levier menant 44 de la surface de compression inférieure 72B du ressort de compression 70.

Par ailleurs, du fait de ces déplacements, il se produit alors une libération de la contrainte exercée par le ressort de compression 70 sur la pédale 34, le ressort 70 entamant une course de détente jusqu'à atteindre son état final détendu.

Dans cette configuration d'enfoncement, on comprend bien que le couple résistant exercée par le ressort de compression 70 s'efface au profit du couple fonctionnel du pédalier 30 qui permet d'assurer la fonction de freinage de la commande à pédale comme cela est visible sur la [fig.14].

L'invention ne se limite pas aux modes de réalisation précédemment décrits. D'autres modes de réalisation à la portée de l'homme du métier peuvent aussi être envisagés sans sortir du cadre de l'invention définie par les revendications ci-après. C'est ainsi, notamment que l'on ne s'éloignerait pas du cadre de l'invention en modifiant la forme de détail du ressort formant l'organe de rattrapage d'un jeu.

## Revendications

1. Pédalier (30) pour commande à pédale (10) d'une fonction de pilotage d'un véhicule automobile, en particulier une fonction de freinage, comprenant un support (32) prévu pour être monté latéralement d'un côté (12) du véhicule automobile, une pédale (34) montée pivotante autour d'un axe de pivot (33) du support (32) et une liaison articulée (40), ladite liaison (40) étant configurée pour relier la pédale (34) à une barre (20) de renvoi transversale de ladite commande (10) reliée à un dispositif de commande de la fonction de pilotage, prévu pour être monté de l'autre côté (14) du véhicule, de telle sorte que l'application d'un couple fonctionnel d'entraînement de ladite pédale (34) autour dudit axe (33) depuis une configuration inactive relevée vers une configuration active enfoncée entraîne la rotation de la barre (20) par l'intermédiaire de la liaison articulée (40) provoquant l'actionnement dudit dispositif, **caractérisé en ce que** le pédalier (30) comprend un organe (50) de rattrapage d'un jeu fonctionnel de la pédale (34), ledit organe (50) étant configuré pour exercer un couple résistant sur ledit axe de pivot (33) de la pédale (34) dans un sens opposé au sens dudit couple fonctionnel, qui tend à s'effacer lors de l'enfoncement de la pédale (34).

2. Pédalier (30) selon la revendication précédente, dans lequel l'organe de rattrapage (50) comprend un ressort (54 ; 70) configuré pour adopter dans la configuration relevée de la pédale (34), un état de travail dans lequel le ressort (54 ; 70) exerce un effort sur la pédale (34) en la sollicitant en pivotement autour de son axe (33) dans un sens opposé à son sens d'enfoncement et pour adopter lors de l'enfoncement de la pédale (34), un état de détente dans lequel le ressort (54 ; 70) tend à libérer la pédale (34) de l'exercice de son effort.

3. Pédalier (30) selon la revendication précédente, dans lequel l'organe (50) comprend un ressort (70) fonctionnant en compression, monté solidaire de ladite liaison articulée (40), et configuré pour exercer un effort de compression contre la pédale (34) dans son état de travail.

4. Pédalier (30) selon la revendication précédente, dans lequel la liaison articulée (40) supporte le ressort (70) de façon à positionner au moins une surface de compression supérieure (72A) du ressort (70) sensiblement à l'aplomb et en contact avec un bord inférieur (36I) de la pédale (34) dans la configuration relevée de la pédale (34) et à l'écarter, par exemple angulairement, dudit bord inférieur (36I) lors de l'enfoncement de la pédale (34).

5. Pédalier (30) selon la revendication 3 ou 4, dans lequel la liaison articulée (40) comprend une biellette (42) reliée à une partie sensiblement médiane (36C) de la pédale (34) en une première articulation de rotation (46) et un levier menant (44) configuré pour être monté solidairement en rotation à la barre de renvoi (20) et relié à la biellette (42) en une deuxième articulation de rotation (48), ledit ressort de compression (70) étant porté par la biellette (42).

6. Pédalier (30) selon la revendication précédente, dans lequel la biellette (42) support le ressort (70) de façon à positionner, dans la configuration relevée, une surface de compression inférieure (72B) du ressort (70) sensiblement à l'aplomb et en contact avec une surface d'une partie sommitale (45) du levier menant (44), adjacente à la deuxième articulation (48).

7. Pédalier (30) selon la revendication 5 ou 6, dans lequel le bord inférieur (36I) de la pédale (34) comprend un profil délimitant un creux (39) dans la partie médiane (36C) de la pédale (34), adjacent à la première articulation (46), la biellette (42) supporte le ressort de compression (70) de façon à positionner une surface de compression (72A) du ressort (70) en vis-à-vis d'une surface dudit creux (39), dans la configuration relevée.

8. Pédalier (30) selon l'une quelconque des revendications 5 à 7, dans lequel la biellette (42) comprend un corps (80) définissant une partie centrale (82) et deux parties d'extrémités d'articulation (84), ladite partie centrale (82) étant pourvue d'une projection dorsale (86) ou frontale délimitant un logement (88) de réception du ressort de compression (70) configuré pour positionner une surface de compression (72A) du ressort (70) contre un bord inférieur (36I) de la pédale (34), dans la configuration relevée de la pédale (34).

9. Pédalier (30) selon la revendication précédente, dans lequel le corps de la biellette (42) comprend deux languettes (92) s'étendant selon le sens de leur longueur selon une direction longitudinale de la biellette (42) en vis-à-vis l'une de l'autre et étant reliées dans la partie centrale (82) de la biellette (42) par la projection dorsale (86) ou frontale.

10. Pédalier selon la revendication précédente, dans lequel les languettes (92) de la biellette (42) convergent localement l'une vers l'autre pour définir une zone de resserrement (94) conformée pour enserrer et retenir un ergot de maintien (78) formé dans le ressort (70).

11. Pédalier (30) selon la revendication 9 ou 10, dans lequel la biellette (42) est obtenue par pliage en deux d'une unique pièce métallique, ladite pièce comprenant deux partie latérales oblongues configurées pour former les languettes (92) et une partie intermédiaire de liaison transversale des deux parties oblongues entre elles configurée pour former la projection (86) délimitant le logement (88) du ressort (70), la pièce étant pliée de façon à amener les parties oblongues en vis-à-vis l'une de l'autre en courbant la partie intermédiaire sur elle-même pour délimiter une paroi (89) du logement (88).

12. Pédalier (30) selon l'une quelconque des revendications 1 à 10 prise ensemble avec la revendication 8, dans lequel la biellette (42) et le ressort de compression (70) sont formés d'une seule pièce obtenue par moulage par injection bi-matière d'une première matière plastique par remplissage d'une cavité libre d'un moule délimitant le corps de la biellette (42) pourvu d'un alésage creux et par moulage par injection d'une deuxième matière plastique par remplissage d'au moins l'alésage creux de la biellette (42) pour former le ressort de compression (70).

13. Pédalier (30) selon la revendication précédente, dans lequel l'alésage forme un canal traversant la projection (86) selon une direction longitudinale de la biellette (42), ledit canal débouchant du côté de la première articulation (46) de la biellette (42) et du côté de la deuxième articulation (48) de la biellette (42).

14. Pédalier (30) selon l'une quelconque des revendications 3 à 13, dans lequel le ressort de compression (70) est formé par un plot en matériau élastomère déformable, tel que du polyuréthane.

15. Pédalier (30) selon la revendication 2, dans lequel l'organe (50) comprend un ressort de torsion (54) de type à enroulement monté autour de l'axe de pivot (33), sollicitant la pédale (34) en pivotement autour de son axe (33) dans un sens opposé à un sens fonctionnel d'enfoncement de la dite pédale (34).

16. Pédalier (30) selon la revendication précédente, dans lequel la pédale comprend un relief (37) configuré pour amener le ressort (54) dans un état précontraint de travail, dans la configuration relevée de la pédale (34), et pour libérer le ressort (54) de cet état précontraint au début d'une course d'enfoncement de la pédale.

17. Pédalier (30) selon la revendication précédente, dans lequel le relief (37) est formé par un décrochement formé dans un bord supérieur (36S) de la pédale (34) qui définit un siège d'appui contre lequel vient s'appliquer une portion d'extrémité (58) du ressort (54).
